# EUROPEAN PATENT SPECIFICATION

(11) **EP 1 907 300 B1**
(45) Date of publication and mention of the grant of the patent: **19.09.2012**
(21) Application number: 06755614.2
(22) Date of filing: 23.06.2006
(51) Int. Cl.: B65D 85/78, B65D 83/00, A23G 9/22

(54) **FOOD CONTAINER AND METHOD OF STORING FOOD**
LEBENSMITTELBEHÄLTER UND VERFAHREN ZUM LAGERN VON LEBENSMITTELN
CONTENANT ALIMENTAIRE ET PROCEDE DE STOCKAGE D'ALIMENTS

(30) Priority: 25.06.2005 GB 0513030
(43) Date of publication of application: 09.04.2008
(73) Proprietor: Icetube Limited, Stratford upon Avon Warwickshire CV37 6JG (GB)
(72) Inventor: WELLS, Andrew, Michael, Milton Keynes MK19 7DL (GB)
(74) Representative: Parnham, Kevin
(86) International application number: PCT/GB2006/002326
(87) International publication number: WO 2007/000577

(56) References cited:
- EP-A- 0 995 685
- EP-A- 1 211 950
- US-A- 1 933 596

## Description

The present invention relates to containers for foods. In particular, the invention relates to containers for frozen and semi-frozen food products such as ice-cream and yoghurt based products.

Packaging for individual portions of frozen and semi-frozen food products such as ice-cream and yoghurt based products are generally split into two types. The first type is packaging that is designed such that the consumer can easily open and consume the food product directly from the container. The second type is packaging arranged for use with dispensing machines that dispense the food into a serving container, for example a dish or a wafer cone. With this second type of container, a consumer cannot easily remove the food without the use of a dispensing machine.

The current invention relates to the first type of container, in which the food product is consumed directly from the container.

It is well known that an individual portion of frozen / semi-frozen food product may be wrapped in a film of plastics material or a paper based wrapper that can be torn open by a consumer at the point of sale or when removed from a home freezer unit. For products in this type of wrapper, either the wrapper is partially opened and used to hold the food when being consumed, for example choc-ices, or the product is mounted on a stick and the wrapper is discarded before eating. In either case, as the ice-cream begins to melt during eating it often flows downwards onto the consumers hands making them very sticky.

One known ice-lolly confectionery comprises a tapered tubular container comprising a cardboard substrate that is coated with a plastics material on its inner face. The container is closed at one end and has an opening at its opposite end. The open end is sealed with a removable cover. When the consumer wants to eat the food, the seal is removed and the user squeezes the tubing to push the confectionery out of the container so that it can be consumed. A problem with this type of container is that the user needs to apply manual pressure to the container during eating to prevent the ice-lolly from slipping back into the tube. If a user squeezes too hard the ice-lolly may slide out of the container and fall onto the floor.

Another form of known container is the 'ice-cream tub'. An ice-cream tub holds an individual portion of ice-cream and is relatively convenient to handle however it is necessary to supply a plastics or wooden spoon with each portion so that the consumer can remove the ice-cream from the tub. The consumer has to have two hands free to remove ice-cream from this type of container.

Yet another type of known container is the so called "push-up" container. This type of container comprises a squat tubular body having a large diameter and short length that includes a plunger arranged to move within the body. The consumer holds the tubular body in one hand and pushes the food product out of the container from below with the plunger. Again, two hands are required to operate this type of device. Another drawback is that prior to consumption, the plunger is located at one end of the tubular body and its handle protrudes a significant distance out of the tube. This makes it an inefficient design for packing and transportation.

US patent 1,933,596 describes the use of a piston within a paper stock barrel that stores and dispenses foodstuffs, such as ice cream. The piston is attached to a stem that extends outwardly from the bottom of the paper barrel, such that an operator can push the stem into the barrel to move the piston to thrust the mass of foodstuff upwardly from an open end of the paper barrel.

WO 01/19205 (corresponding to EP-B-1211950) describes a cartridge-based system in which a cartridge in filled with a foodstuff, such as ice cream, and then sealed at one end by a piston and at another (extruding) end by a wall. The cartridge, in use, in inserted into a cradle of a machine and a plunger is then brought down to engage the piston and force the piston downwards, thereby extruding the foodstuff through an extrusion nozzle fashioned in the other end.

The current invention seeks to provide an alternative type of container that is designed such that the consumer can open and remove the food product contained wherein without the use of a dispensing device.

According to one aspect of the present invention there is provided a container as claimed in claim 1.

The container can be used to store frozen and semi-frozen foods such as ice-cream and yoghurt based products. It allows the food to be consumed directly from the container, without the need for a spoon or a dispensing device. Because the food is removed from the container by sucking the eating action can be performed whilst the consumer is holding the container with only one hand without the possibility of ice-cream dripping onto the consumer's hand since the ice-cream is delivered from the body of the container directly to the consumer's mouth. Furthermore, this prevents the possibility of ice-cream falling onto the floor. If the consumer drops the device on to the floor the food product is largely protected from the ingress of dirt by the container body. Since the container does not include a handle that protrudes from the body it can be packed efficiency

Containers for solid and semi-solid foods that include a piston are known in the art. For example, the container disclosed in EP 0995685 is arranged for use in a dispensing device and requires a magnitude of force that can be delivered by such a device in order for the piston to be driven within the body of the container and for the food product to be dispensed. The dimensions are such that a user would not be able to comfortably fit his/her mouth around the opening of the container. Furthermore, the outlet through which the ice cream is dispensed comprises a star shape cut into a tapered wall. The outlet is surrounded by a shroud. The arrangement is such that it would be very difficult for a consumer to make an effective seal with his/her mouth to suck ice-cream from the container. Also, the pressure differential that a consumer can create when sucking is not sufficiently large to move the piston within the body of the container.

Preferably the body is elongate. Advantageously the hollow body includes a portion of substantially uniform cross-section. The piston is arranged to move along that part of the container in response to the sucking action of the consumer.

Preferably the body is tubular and has an internal width in the range 15mm to 40mm, and more preferably in the range 15mm to 35mm and more preferably in the range 20mm to 30mm. In a preferred embodiment the body is substantially cylindrical and the width ranges provided above relate to diameter sizes. A preferred embodiment has an internal diameter of approximately 25mm.

Advantageously the internal cross-sectional area of the tube is in the range 150mm² to 25 1250mm², more preferably in the range 150mm² to 1000mm², and more preferably still between 200mm² and 800 mm². This helps to ensure that the consumer is able to suck the food from the container. It also helps to ensure that the container has a large surface area to allow heat to enter it to warm the food and to enable it to flow within the body.

In some preferred embodiments the body is elongate and tubular. Preferably the length of the body is in the range 70mm to 300 mm. When the container is used with ice-cream or frozen yoghurt type products, it is necessary for at least part of the food to melt to enable the food to be sucked from the container. To speed up the melting process the consumer can hold the container in his/her hands to allow his/her body heat to melt the food. The elongate form presents a large surface area to the consumer to warm with his/her hands. Preferably the body is arranged to enable heat transfer to the food such that the food will be ready for eating in a time range of 5 seconds to 3 minutes in an ambient temperature of 20°C. and more preferably in a range of 30 seconds to 2 minutes, and more preferably still in a range of 45 seconds to 90 seconds.

The container body can be made from a food equality plastics material such as Borealis or polypropylene. Alternatively, the container body can be made from cardboard, or plastic coated paper based material. The choice of material for the body of the container and the thickness of the material will affect the rate at which heat is transferred to the frozen food product and thus influence how quickly the product will be ready for consumption. Preferably the container body has a wall thickness in the range 0.05mm to 1mm, and is preferably around 0.8mm.

Advantageously the container can be substantially rigid. The container is sufficiently rigid to enable the piston to move along the tub in normal use without it collapsing. Preferably the container has a substantially circular cross-section but may comprise other shapes such as substantially elliptical, triangular, square, rectangular, pentagonal, hexagonal or octagonal.

The mouthpiece can be any suitable shape for being received into the mouth of a person, for example the mouth piece may be a nozzle having a substantially circular, elliptical, triangular, square, rectangular, pentagonal, hexagonal or octagonal cross-section. The mouthpiece is positioned at the end of the body from which food is sucked and wherein the enclosed volume between the piston and the mouthpiece defines a compartment for receiving the food.

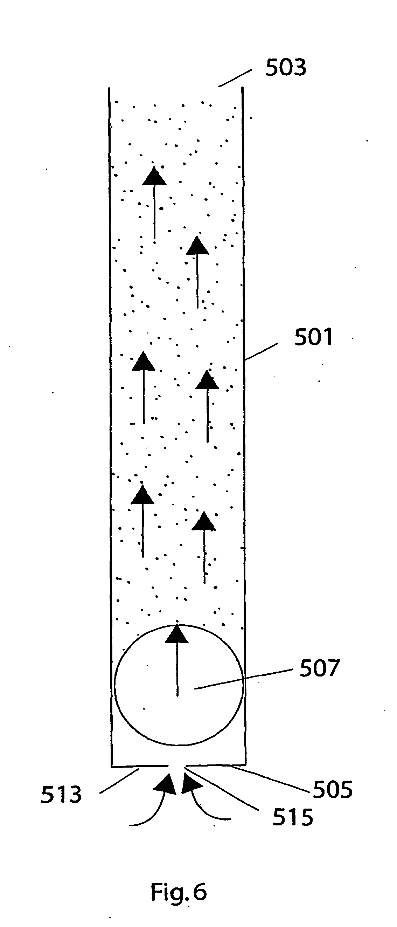

Preferably the mouthpiece includes a tapered portion. For example, the mouthpiece can be arranged such that its cross-sectional area decreases towards the outlet. Preferably the cross- sectional area at the outlet is smaller than the cross-sectional area of the container body. Alternatively, the mouthpiece can be non-tapered and, for example may have the same cross-section as the body (as in Figure 6). Preferably the cross-sectional area of the outlet is in the range 75 mm² to 700 mm², more preferably in the range 175mm² to 500mm² and more preferably still in the range 200mm² to 300mm². Advantageously the walls of the mouthpiece that define the outlet of the mouthpiece are arranged such that the outlet is substantially planar. This assists the user to make an effective seal around the outlet and also enables a seal, such as a tear off foil seal, to be placed across the outlet. The mouthpiece may be reasealable, for example the mouthpiece can be flexible or include a flexible portion such that mouthpiece is arranged to fold between open and closed positions. Alternatively the mouthpiece may include a hinged seal member.

Advantageously the piston and the interior of the body can be arranged to provide a seal sufficient to prevent the food from leaking from the container. For example, the fit between the piston and the internal face of the body may be sufficient to achieve this whilst enabling the piston to move substantially freely within the tube under the sucking action of the consumer. Alternatively the piston may include at least one seal member for providing the seal. For example, the or each seal member is located in a groove formed on the outer surface of the piston. Preferably the piston includes a plurality of seal members. Advantageously the seal members may comprise o-rings located in grooves formed in the outer surface of the piston. In preferred embodiments, the arrangement is such that when the user stops sucking the piston remains stationary. This means that when the user stops sucking food does not flow out of the container. This prevents the possibility of the food falling onto the floor. It also prevents the food from failing back down to the bottom of the container, which means the food is always adjacent the opening and does not have to be sucked from the base of the container.

Preferably the container includes means for scraping the interior of the container as the piston moves along the body of the container. For example, the piston may include at least one scraper member. The scraper member may include a helical profile on an external surface of the piston that is arranged to scrape the internal face of the body as the piston moves within the body. Alternatively the or each scraper member can be in the form of an annular member extending from the exterior of the piston. Preferably the or each scraper member is located in a groove formed in the outer surface of the piston. Advantageously the or each scraper member can be flexible. The means for scraping the internal face of the body may provide a seal between the piston and the body that is arranged to prevent the food from leaking from the container. Preferably the piston includes a portion that is complementary to the interior of the container body. Preferably the piston includes a disc portion. Preferably the piston includes a skirt portion. For example, the piston can be substantially cylindrical, wherein the disc and skirt portions define a hollow cylindrical body, closed at one end and open at the other. Advantageously the or each scraper member and / or the or each seal member can be arranged to protrude outwards from the skirt portion. Preferably the skirt portion is flexible.

In some embodiments the piston has a profiled upper surface. For example, the upper surface of the piston may be domed, curved or convex. Alternatively the upper surface can be substantially planar.

Advantageously the piston can be substantially spherical.

Advantageously the container includes an air inlet to allow air to enter the container as the piston moves within the body. This enables the volume behind the piston to fill with air as ice-cream is sucked from the container. This prevents an airlock occurring. For example, the body is open at the opposite end to that from which the food is dispensed from. It is envisaged that in at least some embodiments the quality of the seal between the piston and the internal wall of the container will be sufficient to prevent liquid from escaping from the container, thus the opposite end from which the food is dispensed may remain open.

Advantageously the container can include a vent arranged to allow air to enter the container and to prevent liquid from escaping the container from the end of the body opposite to that from which the food is dispensed. Preferably the vent includes a membrane or gauze. The membrane or gauze can be liquid impermeable and air permeable. For example, the membrane or gauze may extend across the opening of the hollow body. Alternatively, the membrane or gauze may be mounted in or on a closure member.

Advantageously the container can include a closure member arranged to prevent liquid from escaping from the end of the hollow body opposite to that from which the food is dispensed. For embodiments where the seal between the piston and the internal wall is not of sufficient quality to prevent liquid from escaping from the container, or where there is a risk of the piston falling out of the hollow body, or of being interfered with, then a closure member can be included. For example, the closure member may be formed integrally with the body, or may be a separate component that is permanently or releasably fixed to the body. Advantageously the closure member may include the air inlet or the vent.

Preferably the closure member includes a recess arranged to collect liquid. The vent is preferably located in the recess away from the base of the recess. The gauze or membrane can be mounted in a support in the closure member. The arrangement is such that as liquid collects in the recess the gauze or membrane is held above the level of the liquid. It is envisaged that the seal between the piston and the interior of the hollow body will be sufficiently good in at least some embodiments such that only a small amount of liquid will collect in the recess. In this instance, it is not necessary for the membrane or gauze to be liquid impermeable since the amount of liquid that will fall onto of the gauze or membrane will be very small which produces acceptably small leakages. The support is preferably located substantially co-axially with the piston to reduce the amount of liquid that falls onto the gauze. If a gauze or membrane is used that is liquid impermeable this consideration is not necessary.

According to another aspect of the present invention there is provided an ice-cream, yoghurt based food or confectionery product that is stored in a container as described above.

According to another aspect of the invention there is provided a method of dispensing, from a container, as claimed in any of claims 1 to 14 below.

Preferably the ice-cream product is stored at a temperature in the range -10°C to -30°C. The container body should be made from a material that does not become brittle at the storage temperature.

Embodiments of the invention will now be described by way of example only with reference to the Figures, in which:
Figure 1a shows a partially exploded perspective view a first embodiment of the invention;
Figure 1b is an exploded perspective view of a piston from the first embodiment;
Figure 1c is a side view of the piston of Figure 1b;
Figure 1d is a side view of the piston of Figure 1b with flexible washers located in situ;
Figure 1e is a detail of part of the piston of Figure 1d;
Figure 2a is an exploded perspective view a second embodiment of the invention;
Figure 2b is a side view of a piston from the second embodiment;
Figure 2c is a detail of part of the piston of Figure 2b;
Figure 3a is a partially exploded perspective view a third embodiment of the invention;
Figure 3b is an exploded perspective view of a piston from the third embodiment;
Figure 3c is a side view of the piston of Figure 3b;
Figure 3d is a side view of the piston of Figure 3b with o-rings located in situ;
Figure 3e is a detail of part of the piston of Figure 3d;
Figure 4a is an exploded perspective view of a fourth embodiment of the invention;
Figure 4b is a sectional view of Figure 4a;
Figure 5a is an exploded perspective view of a fifth embodiment of the invention;
Figure 5b is a perspective view of a piston used in the fifth embodiment;
Figure 5c is a side view of the piston of Figure 5b;
Figure 5d is a sectional view along arrows B-B of the piston shown in Figure 5c;
Figure 5e is a top view of the piston of Figure 5b
Figure 5f is a perspective view of a closure member used in the fifth embodiment;
Figure 5g is a side view of the closure member of Figure 5f;
Figure 5h is a sectional view along arrows A-A of the closure member shown in Figure 5g;
Figure 5i is a plan view from above fo the closure member of Figure 5f;
Figure 6 is a sectional view of a sixth embodiment of the invention.

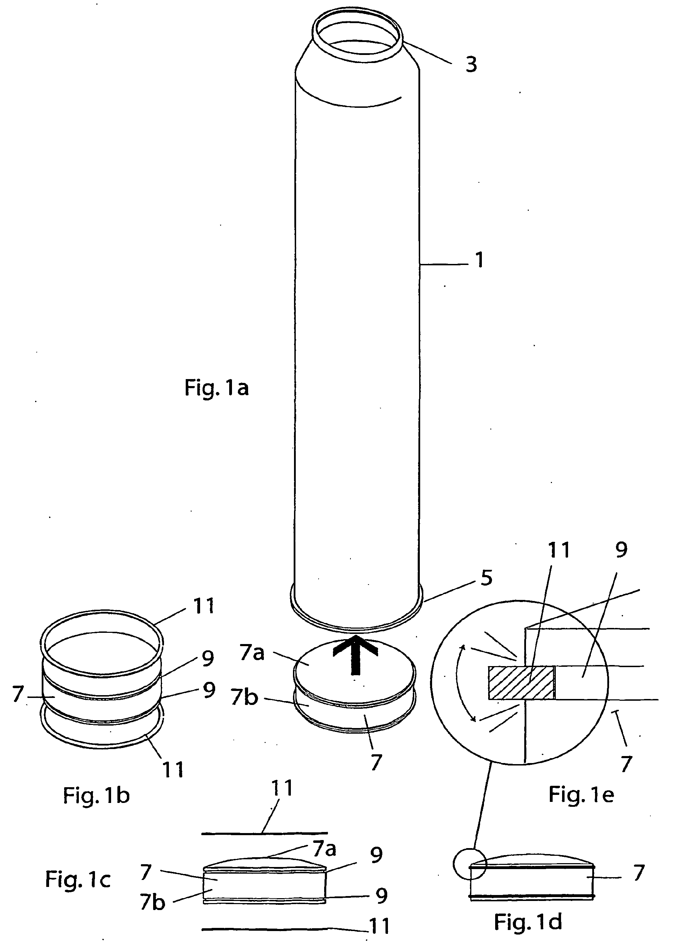

Fig.1 shows a container for frozen foods such as ice-cream. The container comprises a cylindrical body 1. The body 1 is tubular and has a first opening 3, hereinafter called the mouthpiece, where ice-cream can be sucked from the container, and a second opening 5 that is closed, in use, by a piston 7. A large part of the body 1 has a substantially uniform cross-section.

The piston 7 comprises a substantially cylindrical hollow body defined by a leading member 7a and a skirt 7b depending therefrom. Thus the piston 7 is closed at one end and open at the other end. Preferably the leading member 7a has a domed upper surface. This helps to ensure that substantially all the ice-cream is pushed out of the body 1 when the piston 7 approaches the mouthpiece 3. Alternatively the leading member 7a may be substantially planar. The piston 7 helps to ensure that substantially all of the food is dispensed from the body. Without a piston 7 the food in the central portion of the container would be sucked out leaving quantities of food adjacent the wall(s) of the body 1.

The piston includes two grooves 9 formed in the outer surface of the skirt that extend around the circumference of the skirt: one towards the leading end and the other towards the trailing end. The grooves 9 are arranged to each receive a flexible scraper member 11. Each scraper member 11 comprises an annular washer-like element preferably made from a plastics material that is arranged to scrape the inner face of the body as the piston 7 moves within the body 1. The scraper members 11 are arranged substantially co-axially with the piston body and protrude substantially perpendicularly from the skirt 7b.

Since the scraper members 11 are flexible they will deform elastically when they are pushed into the body 1 of the container, and the resiliency of the scraper members 11 ensures that they remain in contact with the internal face of the body.

It will be apparent to the skilled person that the effectiveness of the scraper members 11 will be determined by the manufacturing tolerances and the extent to which the container body 1 is able to deform. For example, when the container is used to store and dispense individual portions of ice-cream, if the tolerances are relatively high and the body 1 does not deform easily then the scraper members 11 will prevent liquid ice-cream from escaping from the body 1. If the tolerances are less good, then the sealing arrangement may be quite poor with a greater quantity of liquid and/or semi-solid ice-cream passing between the body 1 and the piston 7. Even in the latter case, the scraper members 11 will scrape some liquid ice-cream and the vast majority of the solid and semi-solid ice-cream from the internal face of the body.

Typically the length of the tube will be between 70mm and 300mm and it will have a diameter of between 15mm and 40mm, and preferably around 20 to 30 mm. The size of the diameter is important since it defines the cross-sectional area of the container. If the cross-sectional area is too large then the consumer will be unable to suck ice-cream from the container. The internal cross-sectional area of the body 1 is typically less than 1250mm² to ensure that the ice-cream can be comfortably sucked from the container, and preferably in the range 150mm² to 1250mm², more preferably in the range 150mm² to 1000mm², and more preferably still between 200mm² and 800 mm². The cross-sectional area of the container also has implications for the warming process. The smaller the cross-sectional area of the body 1 for a volume of food the greater the exposed surface area for heat to enter the container (see below). Furthermore, the arrangement of the piston 7 and the container body 1 must be such that the pressure differential required to suck ice-cream from the container, and to move the piston 7 within the body 1, is easily achievable by an average person. This is achieved by selecting an appropriate cross-sectional area for the container and by arranging the piston 7 and the body 1 such that the friction between them is low. Of course, there is a trade off between having a low friction arrangement for ease of sucking and preventing liquid food from passing between the piston 7 and the internal face of the body.

The second opening 5 may be open directly to atmosphere if the sealing arrangement between the piston and the body is sufficiently good. If the sealing arrangement is poor, or there is a concern that the product may be tampered with, an air porous gauze or membrane may extend across the second opening 5. Preferably the gauze or membrane is impermeable to the food product when in liquid and/or semi-solid form.

The mouthpiece 3 comprises a tapered nozzle having a substantially circular outlet. The mouthpiece 3 is arranged such that the consumer can make a seal with his/her mouth around the outlet so that ice-cream can be sucked from the container. Preferably the taper is such that the cross-sectional area of the outlet is less than the cross-sectional area of the body to enable the mouthpiece to fit into the consumer's mouth more comfortably. The cross-sectional area of the outlet is typically less than 750mm², and preferably in the range 75 mm² to 700 mm², more preferably in the range 175mm² to 500mm² and more preferably still in the range 200mm² to 300mm². The outlet may have other shapes, for example the cross-section may be substantially elliptical or rectangular. Alternatively, the mouthpiece 3 can be omitted and the consumer can suck ice-cream directly from the body 1 of the container provided that the dimensions of the container permit the consumer to form a seal around it.

The container holds an individual portion of food, such as ice-cream, which can be eaten by the consumer by warming the tube up with his/her hands when the container has been removed from the freezer to melt the ice-cream closest to the curved wall of the container. The time taken to warm each individual portion of ice-cream to enable it to be eaten by the consumer is preferably between five seconds and three minutes at an ambient temperature of 20°C, when handled by the consumer. The container is arranged to speed up the melting process, for example by having thin walls, by arranging the container such that a large surface area is presented to the consumer's hands, for example the container can be elongate, and have a low cross-sectional area, and / or choosing a material for the container with an appropriate coefficient of thermal conductivity. It has been found by the inventor that embodiments having a body 1 with a cross-sectional area of less than around 800mn² enables fast melting times.

Typically the wall thickness of the container will be in the range 0.05mm to 1mm and is preferably around 0.8mm. Preferably the container is made from a plastics material such as polypropylene or Borealis, cardboard, a plastics coated material such as a plastics coated paper based substrate, or metal such as aluminium. The tube can be manufactured via an extrusion process or an injection moulding process or a suitable process for forming cardboard or paper substrate tubes.

The tube is arranged to substantially maintain the internal shape of that part of the tube along which the piston moves, for example the tube is substantially rigid. It is to be noted that the food product will help to prevent the tube from collapsing during use and therefore the tube only has to be sufficiently rigid to maintain the shape with the assistance of the food. Typically, the tube will be sufficiently ridged itself to prevent it from collapsing.

The container is preferably stored at -10°C to -30°C. The container is preferably made from a plastic that can be frozen to -30°C without becoming brittle and that is food quality, for example Borealis or polypropylene. Preferably the plastic is opaque but it may be clear or coloured.

In use, the container is removed from a freezer unit. The container can be allowed to stand for a period to allow the food, for example ice-cream, adjacent the side wall(s) of the container to partially melt. The process can be speeded up by applying heat, for example by the consumer holding the container in his/her hand. A seal is removed from the mouthpiece 3. When sufficient ice-cream has melted, the ice-cream can flow within the body 1 and the consumer is able to suck the ice-cream out of the container via the mouthpiece 3. As the ice-cream is sucked from the container the piston 7 moves into the body 1 of the container and the scraper members 11 are drawn over the internal face of the body and push the ice-cream towards the mouthpiece 3. Movement of the piston 7 reduces the volume of that part of the container that stores the food product. Since the second end 5 of the container is open, air can enter the body 1 as the ice-cream is removed. This prevents an airlock from occurring, which would make sucking much harder for the consumer and may eventually prevent ice-cream from being removed from the container. Thus the food can be consumed whilst the user holds the container with only one hand and there is no opportunity for ice-cream to spill onto the consumer's hand.

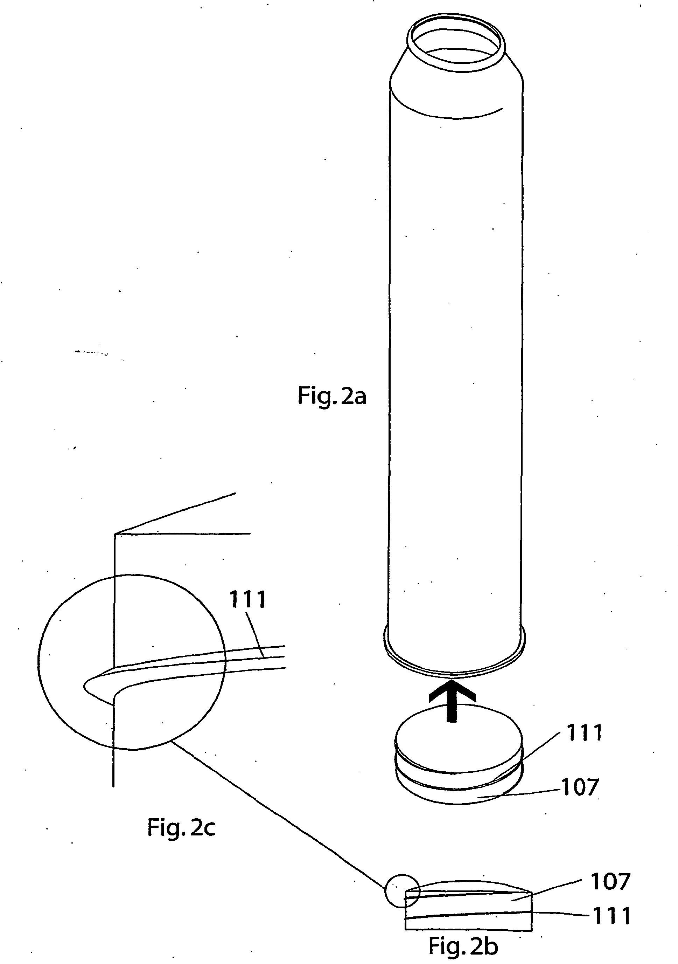

A second embodiment is shown in Figures 2a to 2c. The arrangement is similar to the first embodiment, however instead of including two scraper members arranged co-axially with the piston, the piston 107 includes an external helical thread 111 that performs a similar scraping function to the scraper members 11.

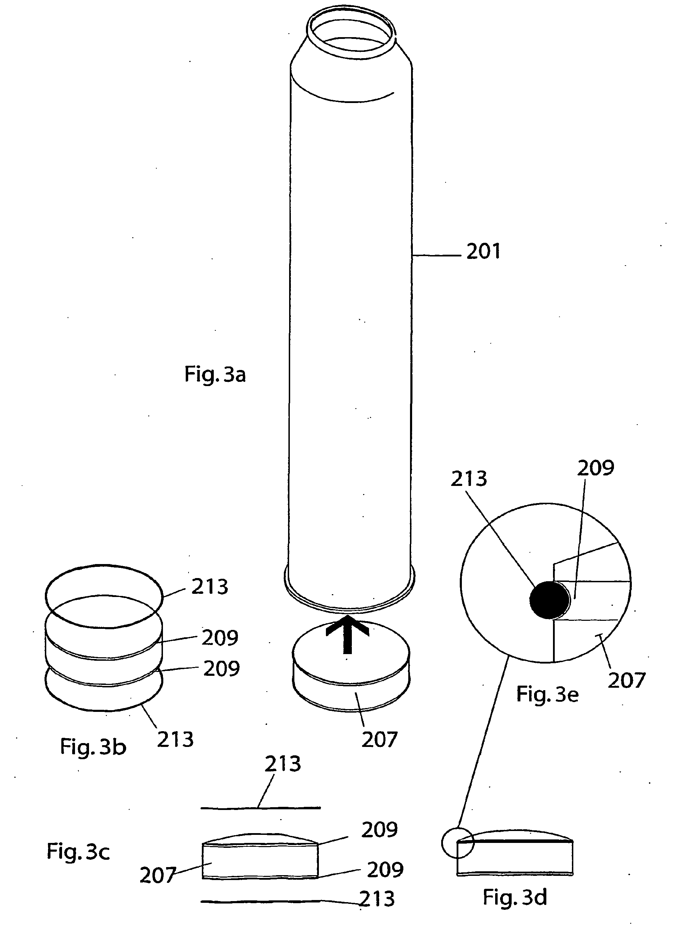

A third embodiment is shown in Figures 3a to 3e. The arrangement is similar to the first embodiment, however the scraper members 11 are replaced with o-ring seals 213, which are located in grooves 209. It is envisaged that this embodiment will have an improved sealing arrangement to prevent liquid food from passing between the piston 207 and the internal face of the body 201. Preferably the o-ring seals are made from a natural or synthetic rubber.

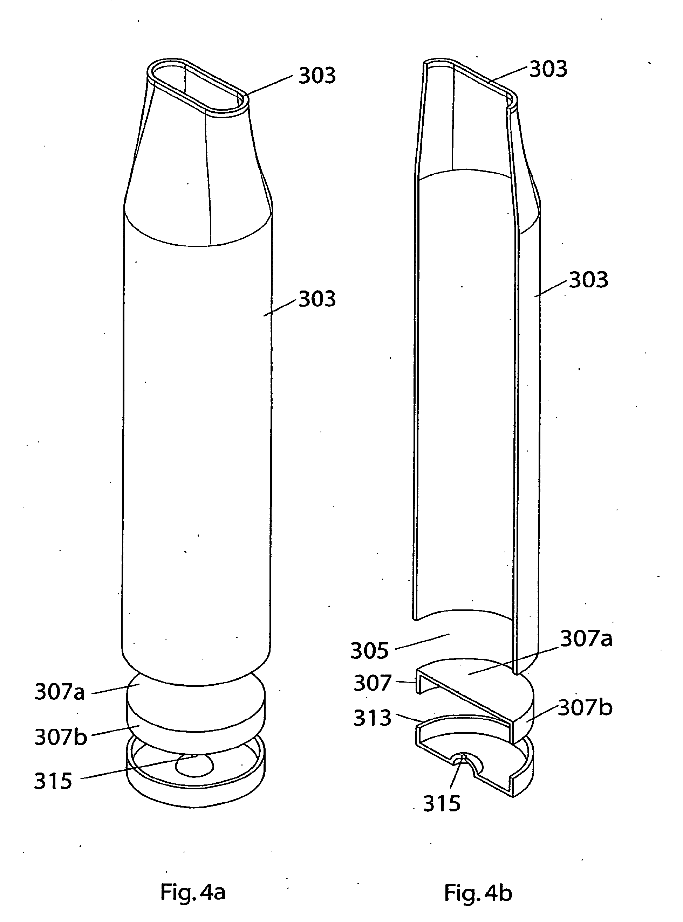

A fourth embodiment is shown in Figures 4a and 4b. The arrangement is similar to the first embodiment except that the mouthpiece 303 is in the form of a nozzle that tapers to a substantially rectangular opening, the piston 307 does not include grooves, scraper members or separate seals, and the end of the container includes a closure member 313.

The piston 307 includes a substantially planar leading member 307a and a skirt 307b depending therefrom, the arrangement being such that it defines a substantially hollow cylindrical body that is closed at one end and open at the other end. The piston 307 is dimensioned to provide some sealing effect between itself and the internal face of the body. However, it is envisaged that this arrangement will not be as effective as the arrangements of at least the first and third embodiments at preventing liquid food from passing between the piston and the internal face of the body. However the friction between them is lower and therefore the piston moves more freely within the body. Accordingly, the closure member 313 is located in the second opening 305 to prevent or reduce the amount of food leaking from the container.

The closure member 313 comprises a substantially hollow cylindrical body that includes a curved side wall and is open at one end and closed at the other, wherein the closed end and the side wall defines a sump for collecting food that has passed between the internal face of the body and the piston 307. The closure member 313 is located in the second opening 305 and may be fixed in place or releasably attached thereto. For example, the closure member 313 may be welded in place or pressed into place. Alternatively, the closure member 313 can be formed integrally with the body 1.

An air inlet 315 is provided in the closure member 313. The air inlet 315 allows air to enter the body 301 via the second opening 305. The air inlet 315 comprises a hole formed through the closed end of the closure member 313. Preferably the air inlet 315 is raised above the base of the sump such that as liquid food collects in the sump, it will not exit the container via the air inlet 315, or the amount that exits via that route is small. The air inlet 315 is preferably formed in an upper part of a convex formation.

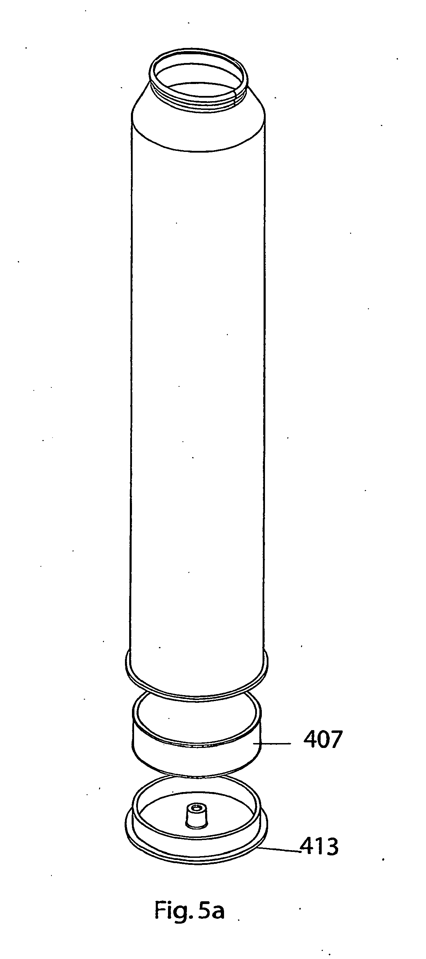

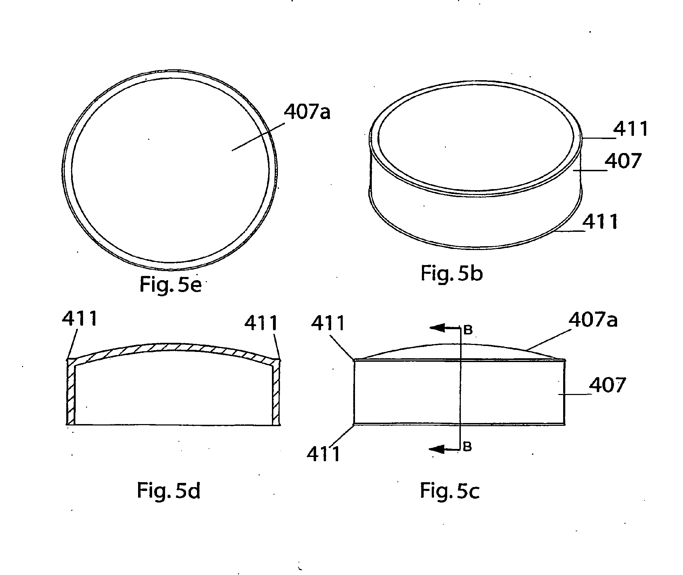

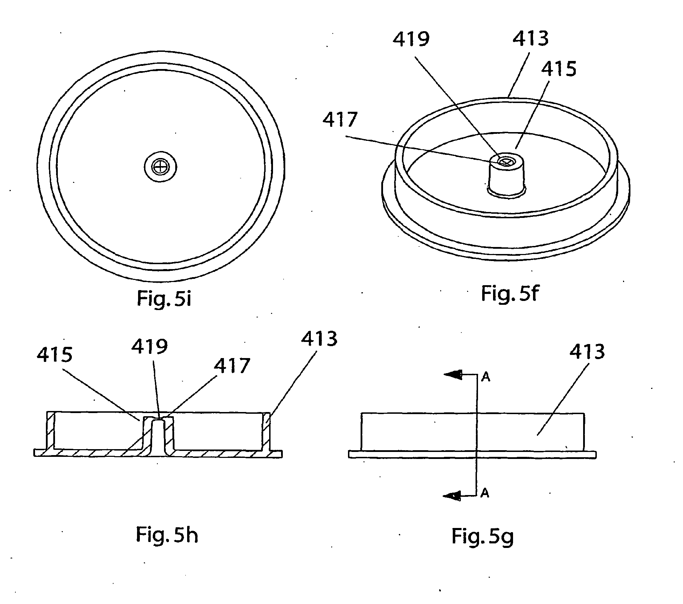

A fifth embodiment is shown in Figures 5a to 5i. The fifth embodiment is similar to the fourth embodiment except that the piston 407 includes leading and trailing rims 411 that act in a similar fashion to scraper members 11 in the first embodiment. The rims 411 are integrally formed with the piston 407, for example during a moulding process. The piston 407 has a curved leading member 407a similar to the first embodiment.

The closure member 413 is similar to the closure member 313 in the fourth embodiment however the air inlet 415 includes a vent 417 comprising a gauze or membrane 419 extending across the air inlet 415. Preferably the gauze or membrane 419 is permeable to air but impermeable to the food product This enables air to enter the body 1 to prevent an air lock from forming, whilst preventing ice-cream, for example, from leaking out of the body. The gauze of membrane 419 is mounted in a support that raises it above the base of the sump.

A sixth embodiment is shown in Figure 6. The sixth embodiment is similar to the fourth embodiment except that the piston 507 comprises a substantially spherical ball, preferably made from a plastics material. Alternatively, the spherical ball can be made from an edible material such as candy or chocolate. The closure member 513 is integrally formed with the body 501. The closure member 513 includes an air inlet 515 in its closed end, which allows air to enter the body 501 via the second end 505. The sixth embodiment is shown without a mouthpiece so that the edible ball can be removed from the container, however a detachable mouthpiece can be optionally used for this embodiment.

It has been found by the inventor that embodiments having a body 1 with a cross-sectional area of less than or equal to around 800mm² enables fast melting times and also enables the consumer to make a comfortable seal around the body 501, which helps the consumer to suck the ice-cream from the container.

In some embodiments it will be necessary to push the piston manually to enable the ice-cream to be initially sucked from the container. When some ice-cream has been sucked from the container it should no longer be necessary to push the piston.

It will be appreciated by the skilled person that features of some of the embodiments may be used in other embodiments, for example the closure members used in embodiments four to six can be used in any of the other embodiments.

The mouthpiece may be resealable, for example the mouthpiece may include a flip open-close or hinged lid to enable the container to be closed and reopened. This enables a consumer to eat only part of the food product and then to reseal it so that more of the product can be eaten later.

The piston can have a substantially solid construction.

The cross section of the body may be non-circular, for example it may be substantially polygonal such as substantially triangular, square, rectangular, pentagonal, hexagonal, or octagonal.

Of course the body may have a large cross-sectional area when used in conjunction with a mouthpiece that provides a seal with the body and provides an outlet having a smaller cross-sectional area than the body to enable the consumer to make a seal around the outlet of the mouthpiece.

## Claims

1. A container storing and then presenting a frozen or semi-frozen food portion comprising a hollow body (1, 201, 501) having an opening (3, 303) and a piston (7, 107, 207,307,407,507) located within said body, said opening being dimensioned for a consumer to apply suction in use upon the food in the container, said body having an internal surface area and a wall thickness, wherein at least one of said internal surface area and/or said wall thickness is configured such that, in use, heat and in particular body heat can be transferred from the exterior to the interior of a container by a hand of a consumer in use holding said container for frozen or semi-frozen food contained within said container to melt said frozen or semi-frozen food, said piston forming substantially a seal (11, 111, 213, 411) and being arranged to move in use within the body with the food portion in response to a consumer sucking at least partially locally melted food from said container via said opening, wherein said container includes a mouthpiece including an outlet through which said at least partially melted food in said container may be consumed by sucking on said mouthpiece, wherein said mouthpiece is arranged such that said consumer can make a seal around said mouthpiece with his mouth.

2. A container according to claim 1, wherein said body is elongate.

3. A container according to claim 1 or claim 2, wherein said body is tubular and has an internal width in the range 15mm to 40mm and/or has an internal cross-sectional area in the range 150mm² to 1250mm².

4. A container according to claim 4, wherein said mouthpiece includes a separate tapered portion.

5. A container according to any preceding claim, wherein said piston and an interior of said body are arranged to provide a seal sufficient to prevent said at least partially melted food from leaking from said container.

6. A container according to any preceding claim , further comprising a scraper (11) for scraping an in terior of said container as said piston moves along said body of said container.

7. A container according to any preceding claim wherein said piston has a profiled upper surface.

8. A container according to any preceding claim wherein said piston is substantially spherical.

9. A container according to any preceding claim further comprising an air inlet (315, 415, 515) to allow air to enter said container as said piston moves within the body.

10. A container according to claim 9, wherein said air inlet includes a membrane or gauze (419) to prevent at least partially melted food from escaping the container.

11. A container according to any preceding claim, further comprising a closure member (313, 413, 513) arranged to prevent said at least partially melted food from escaping from an end of said hollow body opposite to that from which the said at least partially melted food is dispensed.

12. A container according to claim 11, wherein said closure member includes a recess arranged to collect some of said at least partially melted food.

13. A container according to claim 1 I further comprising an individual portion of ice-cream or a frozen or semi-frozen yoghurt based food or other dairy food product.

14. A container according to claim 1 further comprising an individual portion of a frozen or semi-frozen confectionary or other non-diary food product.

15. A method of storing foods, said method including storing a portion of the food in a container as claimed in any of claims 1 to 14.

## Patentansprüche

1. Behälter zum Aufbewahren und dann Darbieten einer gefrorenen oder halbgefrorenen Nahrungsmittelportion, umfassend einen hohlen Körper (1, 201, 501) mit einer Öffnung (3, 303) und einen Kolben (7, 107, 207, 307, 407, 507), der sich in dem genannten Körper befindet, wobei die genannte Öffnung dazu bemessen ist, dass ein Konsument in Gebrauch Saugwirkung auf das Nahrungsmittel in dem Behälter ausüben kann, wobei der genannte Körper eine Innenfläche und eine Wanddicke aufweist, wobei die genannte Innenfläche und/oder die genannte Wanddicke derart ausgebildet sind, dass in Gebrauch Wärme und insbesondere Körperwärme durch eine Hand eines Konsumenten, die in Gebrauch den genannten Behälter für in dem genannten Behälter enthaltenes gefrorenes oder halbgefrorenes Nahrungsmittel hält, vom Äußeren zum Inneren eines Behälters übertragen werden kann, um das genannte gefrorene oder halbgefrorene Nahrungsmittel zu schmelzen, wobei der genannte Kolben im Wesentlichen eine Dichtung (11, 111, 213, 411) bildet und dazu angeordnet ist, sich in Gebrauch als Reaktion darauf, dass ein Verbraucher mindestens teilweise örtlich geschmolzenes Nahrungsmittel über die genannte Öffnung aus dem genannten Behälter saugt, in dem Körper mit der Nahrungsmittelportion zu bewegen, wobei der genannte Behälter ein Mundstück mit einem Auslass umfasst, durch den das genannte mindestens teilweise geschmolzene Nahrungsmittel in dem genannten Behälter durch Saugen an dem genannten Mundstück konsumiert werden kann, wobei das genante Mundstück derart angeordnet ist, dass der genannte Konsument mit seinem Mund eine Dichtung um das genannte Mundstück erzeugen kann.

2. Behälter nach Anspruch 1, wobei der genannte Körper langgestreckt ist.

3. Behälter nach Anspruch 1 oder Anspruch 2, wobei der genannte Körper röhrenförmig ist und eine innere Breite im Bereich 15 mm bis 40 mm aufweist und/oder eine innere Querschnittsfläche im Bereich 150 mm² bis 1250 mm² aufweist.

4. Behälter nach Anspruch 4, wobei das genannte Mundstück einen getrennten verjüngten Abschnitt aufweist.

5. Behälter nach einem der vorangehenden Ansprüche, wobei der genannte Kolben und ein Inneres des genannten Körpers dazu angeordnet sind, eine Dichtung vorzusehen, die ausreicht, zu verhindern, dass mindestens teilweise geschmolzenes Nahrungsmittel aus dem genannten Behälter ausläuft.

6. Behälter nach einem der vorangehenden Ansprüche, weiter umfassend einen Schaber (11) zum Schaben eines Inneres des genannten Behälters wenn sich der genannte Kolben entlang dem genannten Körper des genannten Behälters bewegt.

7. Behälter nach einem der vorangehenden Ansprüche, wobei der genannte Kolben eine profilierte obere Oberfläche aufweist.

8. Behälter nach einem der vorangehenden Ansprüche, wobei der genannte Kolben im Wesentlichen kugelförmig ist.

9. Behälter nach einem der vorangehenden Ansprüche, weiter umfassend einen Lufteinlass (315, 415, 515), um Luft in den genannten Behälter eintreten zu lassen, wenn sich der genannte Kolben in dem Körper bewegt.

10. Behälter nach Anspruch 9, wobei der genannte Lufteinlass eine Membran oder Gaze (419) umfasst, um mindestens teilweise geschmolzenes Nahrungsmittel daran zu hindern, aus dem Behälter zu entweichen.

11. Behälter nach einem der vorangehenden Ansprüche, weiter umfassend ein Verschlusselement (313, 413, 513), das dazu angeordnet ist, mindestens teilweise geschmolzenes Nahrungsmittel daran zu hindern, aus einem Ende des genannten hohlen Körpers zu entweichen, das demjenigen gegenüberliegt, aus dem das genannte mindestens teilweise geschmolzene Nahrungsmittel ausgegeben wird.

12. Behälter nach Anspruch 11, wobei das genannte Verschlusselement eine Vertiefung umfasst, die dazu angeordnet ist, mindestens etwas des genannten mindestens teilweise geschmolzenen Nahrungsmittels aufzufangen.

13. Behälter nach Anspruch 1, weiter umfassend eine einzelne Portion Speiseeis oder eines gefrorenen oder halbgefrorenen Nahrungsmittels auf Joghurtbasis oder eines anderen Milchnahrungsmittelprodukts.

14. Behälter nach Anspruch 1, weiter umfassend eine einzelne Portion eines gefrorenen oder halbgefrorenen Konfekts oder anderen milchfreien Nahrungsmittelprodukts.

15. Verfahren zum Aufbewahren von Nahrungsmitteln, wobei das genannte Verfahren das Aufbewahren einer Portion des Nahrungsmittels in einem Behälter nach einem der Ansprüche 1 bis 14 umfasst.

## Revendications

1. Contenant conservant et présentant une portion alimentaire congelée ou semi-congelée comprenant un corps creux (1, 201 ,501) ayant une ouverture (3, 303) et un piston (7, 107, 207, 307, 407, 507) situés dans ledit corps, ladite ouverture étant dimensionnée pour qu'un consommateur applique durant l'utilisation une aspiration sur l'aliment dans le contenant, ledit corps ayant une superficie interne et une épaisseur de paroi, dans lequel au moins l'une de ladite superficie interne et/ou de ladite épaisseur de paroi est configurée de telle sorte que, durant l'utilisation, de la chaleur et en particulier la chaleur corporelle puisse être transférée de l'extérieur à l'intérieur d'un contenant par la main d'un consommateur qui durant l'utilisation tient le contenant d'aliment congelé ou semi-congelé contenu dans ledit contenant afin de faire fondre ledit aliment congelé ou semi-congelé, ledit piston formant sensiblement un joint (11, 111, 213, 411) et étant agencé pour durant l'utilisation se déplacer dans le corps avec la portion alimentaire en réponse à l'aspiration par un consommateur d'un aliment au moins partiellement fondu localement depuis le contenant par l'intermédiaire de ladite ouverture, ledit contenant comportant une embouchure comportant une sortie par laquelle ledit aliment au moins partiellement fondu dans ledit contenant peut être consommé en aspirant sur ladite embouchure, ladite embouchure étant agencée de telle sorte que ledit consommateur puisse former avec sa bouche un joint étanche autour de ladite embouchure.

2. Contenant selon la revendication 1, dans lequel ledit corps est allongé.

3. Contenant selon la revendication 1 ou la revendication 2, dans lequel ledit corps est tubulaire et a une largeur interne dans la plage de 15 mm à 40 mm et/ou a une superficie interne en coupe transversale comprise dans la plage de 150 mm² à 1250 mm².

4. Contenant selon la revendication 4, dans lequel ladite embouchure comporte une partie conique séparée.

5. Contenant selon l'une quelconque des revendications précédentes, dans lequel ledit piston et un intérieur dudit corps sont agencés de façon à assurer un joint suffisant pour empêcher ledit aliment au moins partiellement fondu de s'échapper dudit contenant.

6. Contenant selon l'une quelconque des revendications précédentes, comprenant en outre une racle (11) pour racler un intérieur dudit contenant au fur et à mesure que ledit piston se déplace le long dudit corps dudit contenant.

7. Contenant selon l'une quelconque des revendications précédentes, dans lequel ledit piston a une surface supérieure profilée.

8. Contenant selon l'une quelconque des revendications précédentes, dans lequel ledit piston est sensiblement sphérique.

9. Contenant selon l'une quelconque des revendications précédentes, comprenant en outre une admission d'air (315, 415, 515) pour laisser entrer l'air dans ledit contenant au fur et à mesure que ledit piston se déplace dans le corps.

10. Contenant selon la revendication 9, dans lequel ladite admission d'air comporte une membrane ou gaze (419) pour empêcher l'aliment au moins partiellement fondu de s'échapper du contenant.

11. Contenant selon l'une quelconque des revendications précédentes, comprenant en outre un élément de fermeture (313, 413, 513) agencé pour empêcher ledit aliment au moins partiellement fondu de s'échapper d'une extrémité dudit corps creux opposée à celle à partir de laquelle ledit aliment au moins partiellement fondu est distribué.

12. Contenant selon la revendication 11, dans lequel ledit élément de fermeture comporte un évidement agencé pour collecter une partie dudit aliment au moins partiellement fondu.

13. Contenant selon la revendication 1, comprenant en outre une portion individuelle de glace ou un aliment à base de yaourt congelé ou semi-congelé ou autre produit alimentaire laitier.

14. Contenant selon la revendication 1, comprenant en outre une portion individuelle d'une confiserie congelée ou semi-congelée ou autre produit alimentaire non laitier.

15. Procédé de stockage d'aliments, ledit procédé comportant le stockage d'une portion de l'aliment dans un contenant selon l'une quelconque des revendications 1 à 14.
